# EUROPEAN PATENT APPLICATION

(11) **EP 4 810 780 A1**
(43) Date of publication of application: **23.09.2026**
(21) Application number: 26166859.4
(22) Date of filing: 23.03.2026
(51) Int. Cl.: F02C 6/00, B64D 27/33, F02C 7/14, F02C 7/32, F01D 15/10

(54) **THERMAL MANAGEMENT ASSEMBLY FOR A HYBRID-ELECTRIC AIRCRAFT PROPULSION SYSTEM**

(30) Priority: 21.03.2025 US 202519087101
(71) Applicant: RTX Corporation, Farmington, CT 06032 (US)
(72) Inventor: CLARK, Thomas E., Wells, 04090 (US); AKIN, John, Charlotte, 28205 (US); CHOE, Jung Muk, Glastonbury, 06033 (US)
(74) Representative: Dehns

(57) **Abstract**

A propulsion system (20) includes an electrical assembly (26). The electrical assembly (26) includes an electric machine (86), a control unit (88), and a thermal management assembly (84). The control unit (88) is electrically connected to the electric machine (86). The thermal management assembly (84) includes an electric machine cooling circuit, a control unit (CU) cooling circuit, and a pump assembly. The electric machine cooling circuit is connected in fluid communication with the electric machine (86). The CU cooling circuit is connected in fluid communication with the control unit (88). The pump assembly includes a pump shaft, a first pump rotor, and a second pump rotor. The first pump rotor and the second pump rotor are mounted on the pump shaft. The first pump rotor forms a coolant pump of the electric machine cooling circuit. The second pump rotor forms a coolant pump of the CU cooling circuit.

## Description

### BACKGROUND

### 1. Technical Field

This disclosure relates generally to hybrid-electric propulsion systems for aircraft and, more particularly, to cooling systems for electric machine assemblies.

### 2. Background Information

Hybrid-electric propulsion systems for aircraft include electrical equipment, such as electric machines, configured to operate with an engine to provide thrust for an associated aircraft. This electrical equipment may typically require complex thermal management to facilitate reliable operation in view of the varying temperature extremes and operating conditions experienced by aircraft propulsion systems. Various thermal management systems and methods for hybrid-electric aircraft propulsion systems are known in the art. While these known systems and methods may be useful for their intended purposes, there is always room in the art for improvement.

### SUMMARY

According to an aspect of the present disclosure, a hybrid-electric aircraft propulsion system includes a gas turbine engine and an electrical assembly. The gas turbine engine includes a first rotational assembly. The first rotational assembly includes a first shaft, a bladed first compressor rotor, and a bladed first turbine rotor. The first shaft interconnects the bladed first compressor rotor and the bladed first turbine rotor. The electrical assembly includes a first electric machine, a first control unit, and a thermal management assembly. The first electric machine is coupled with the first rotational assembly. The first control unit is electrically connected to the first electric machine. The thermal management assembly includes a first electric machine cooling circuit, a first control unit (CU) cooling circuit, and a first pump assembly. The first electric machine cooling circuit is connected in fluid communication with the first electric machine. The first CU cooling circuit is connected in fluid communication with the first control unit and isolated from fluid communication with the first electric machine cooling circuit. The first pump assembly includes a first pump shaft, a first pump rotor, and a second pump rotor. The first pump rotor and the second pump rotor are mounted on the first pump shaft. The first pump rotor forms a first coolant pump of the first electric machine cooling circuit. The second pump rotor forms a second coolant pump of the first CU cooling circuit.

In any of the aspects or examples described above and herein, the first pump assembly may further include a pump electric machine configured to drive rotation of the first pump shaft, the thermal management assembly may further include a dual-channel controller including a first control channel and a second control channel, and each of the first control channel and the second control channel may be electrically connected to the pump electric machine.

In any of the aspects or examples described above and herein, the gas turbine engine may further include a transmission interconnecting the first rotational assembly and the first electric machine, and the transmission may be connected in fluid communication with the first CU cooling circuit.

In any of the aspects or examples described above and herein, the thermal management assembly may further include a transmission control valve connected in fluid communication with and between the transmission and the first CU cooling circuit.

In any of the aspects or examples described above and herein, the first rotational assembly may further include a bladed fan rotor coupled with the first shaft.

In any of the aspects or examples described above and herein, the gas turbine engine may further include a transmission interconnecting the first rotational assembly and the first electric machine, the thermal management assembly may further include a transmission fluid circuit connected in fluid communication with the transmission, the first pump assembly may include a third pump rotor mounted on the first pump shaft, and the third pump rotor may form a transmission fluid pump of the transmission fluid circuit.

In any of the aspects or examples described above and herein, the gas turbine engine may include a second rotational assembly, the second rotational assembly may include a second shaft, a bladed second compressor rotor, and a bladed second turbine rotor, the second shaft may interconnect the bladed second compressor rotor and the bladed second turbine rotor, the electrical assembly may include a second electric machine and a second control unit, the second electric machine may be coupled with the second rotational assembly, the second control unit may be electrically connected to the second electric machine, the thermal management assembly may include a second electric machine cooling circuit, a second CU cooling circuit, and a second pump assembly, the second electric machine cooling circuit may be connected in fluid communication with the second electric machine, the second CU cooling circuit may be connected in fluid communication with the second control unit and isolated from fluid communication with the second electric machine cooling circuit, the second pump assembly may include a second pump shaft, a third pump rotor, and a fourth pump rotor, the third pump rotor and the fourth pump rotor may be mounted on the second pump shaft, the third pump rotor may form a third coolant pump of the second electric machine cooling circuit, and the fourth pump rotor may form a fourth coolant pump of the second CU cooling circuit.

In any of the aspects or examples described above and herein, the first electric machine cooling circuit may be isolated from fluid communication with the second electric machine cooling circuit.

In any of the aspects or examples described above and herein, the thermal management assembly may further include a heat exchanger forming the first electric machine cooling circuit and the second electric machine cooling circuit.

In any of the aspects or examples described above and herein, the first CU cooling circuit may be isolated from fluid communication with the second CU circuit.

According to another aspect of the present disclosure, a hybrid-electric aircraft propulsion system includes a gas turbine engine and an electrical assembly. The gas turbine engine includes a first rotational assembly and a second rotational assembly. The electrical assembly includes a first electric machine, a first control unit, a second electric machine, a second control unit, and a thermal management assembly. The first electric machine is coupled with the first rotational assembly. The first control unit is electrically connected to the first electric machine. The second electric machine is coupled with the second rotational assembly. The second control unit is electrically connected to the second electric machine. The thermal management assembly includes a plurality of independent cooling fluid circuits including a first electric machine cooling circuit for the first electric machine, a first control unit (CU) cooling circuit for the first control unit, a second electric machine cooling circuit for the second electric machine, and a second CU cooling circuit for the second control unit. The thermal management assembly further includes a first pump assembly and a second pump assembly. The first pump assembly is configured to circulate coolant through the first electric machine cooling circuit and the first CU cooling circuit. The second pump assembly is configured to circulate coolant through the second electric machine cooling circuit and the second CU cooling circuit.

In any of the aspects or examples described above and herein, the first pump assembly may include a first pump shaft, a first pump rotor, and a second pump rotor, the first pump rotor and the second pump rotor may be mounted on the first pump shaft, the first pump rotor may form a first coolant pump of the first electric machine cooling circuit, and the second pump rotor may form a second coolant pump of the first CU cooling circuit.

In any of the aspects or examples described above and herein, the first rotational assembly may form a high-pressure spool of the gas turbine engine and the second rotational assembly may form a low-pressure spool of the gas turbine engine.

In any of the aspects or examples described above and herein, the gas turbine engine may further include a transmission interconnecting the second rotational assembly and the second electric machine, and the transmission may be connected in fluid communication with the second CU cooling circuit.

In any of the aspects or examples described above and herein, the thermal management assembly may further include a transmission control valve connected in fluid communication with and between the transmission and the second CU cooling circuit.

In any of the aspects or examples described above and herein, the gas turbine engine may further include a transmission interconnecting the second rotational assembly and the second electric machine, the thermal management assembly may further include a transmission fluid circuit connected in fluid communication with the transmission, the second pump assembly may include a pump shaft and a pump rotor, the pump rotor may be mounted on the pump shaft, and the pump rotor may form a transmission fluid pump of the transmission fluid circuit.

In any of the aspects or examples described above and herein, the thermal management assembly may further include a heat exchanger forming the first electric machine cooling circuit and the second electric machine cooling circuit.

In any of the aspects or examples described above and herein, the gas turbine engine may further include fuel system, and the heat exchanger may be a fuel-oil heat exchanger of the fuel system.

In any of the aspects or examples described above and herein, the gas turbine engine may further include a main oil system, and the heat exchanger may be an oil-oil heat exchanger of the main oil system.

In any of the aspects or examples described above and herein, a method for operating a thermal management assembly of a hybrid-electric propulsion system includes rotating a first rotational assembly. The first rotational assembly includes a first shaft, a bladed first compressor rotor, and a bladed first turbine rotor. The first shaft interconnects the bladed first compressor rotor and the bladed first turbine rotor. The method further includes selectively operating a first electric machine coupled with the first rotational assembly using a first control unit electrically connected to the first electric machine and operating a thermal management assembly including a first electric machine cooling circuit and a first control unit (CU) cooling circuit by pumping a coolant through each of the first electric machine cooling circuit and the first CU cooling circuit with a first pump assembly. The first pump assembly includes a pump electric machine, a first pump rotor at the first electric machine cooling circuit, and a second pump rotor at the first CU cooling circuit. Pumping the coolant through each of the first electric machine cooling circuit and the first CU cooling circuit with the first pump assembly includes driving rotation of the first pump rotor and the second pump rotor with the pump electric machine. The first electric machine cooling circuit is isolated from fluid communication with the first CU cooling circuit.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood; however, the following description and drawings are intended to be exemplary in nature and non-limiting.

### BRIEF DESCRIPTION OF THE DRAWINGS

FIG. 1 illustrates a perspective view of an aircraft including a propulsion system, in accordance with one or more embodiments of the present disclosure.
FIG. 2 schematically illustrates a cutaway, side view of a hybrid-electric propulsion system for an aircraft, in accordance with one or more embodiments of the present disclosure.
FIG. 3 schematically illustrates a thermal management assembly for an electrical assembly of the hybrid-electric propulsion system, in accordance with one or more embodiments of the present disclosure.
FIG. 4 schematically illustrates another thermal management assembly, in accordance with one or more embodiments of the present disclosure.
FIG. 5 schematically illustrates yet another thermal management assembly, in accordance with one or more embodiments of the present disclosure.

### DETAILED DESCRIPTION

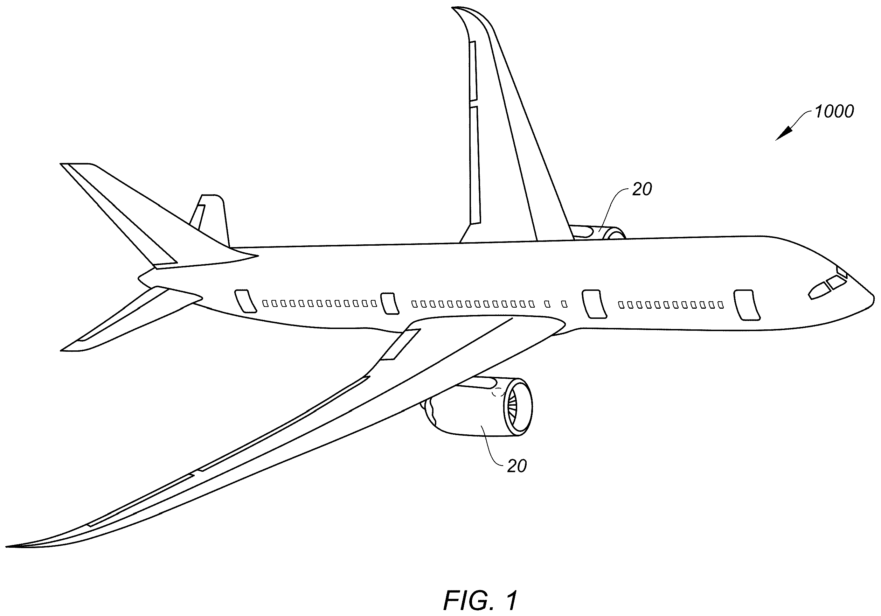

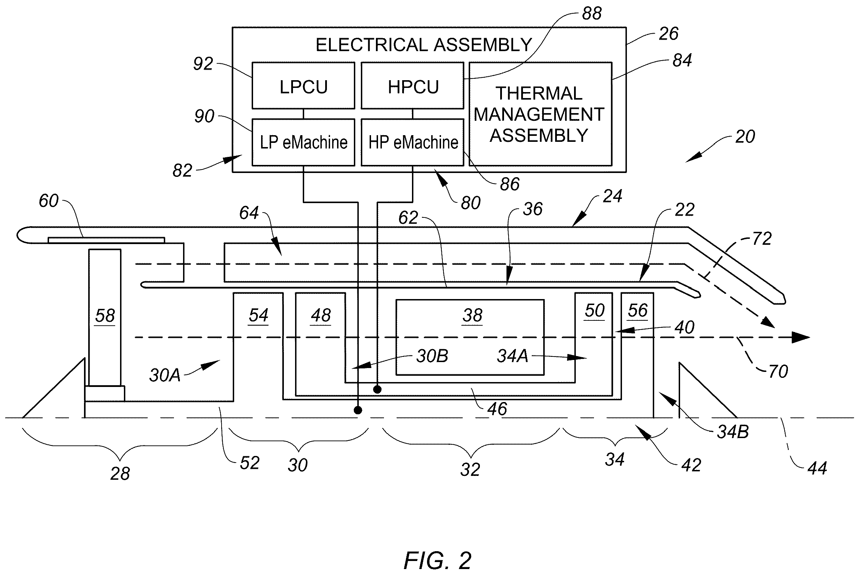

FIG. 1 illustrates a propulsion system 20 for an aircraft 1000. FIG. 2 schematically illustrates a cutaway, side view of the propulsion system 20. The propulsion system 20 of FIG. 2 is configured as a hybrid-electric propulsion system. The propulsion system 20 includes a gas turbine engine 22, a nacelle 24, and an electrical assembly 26.

The gas turbine engine 22 of FIG. 2 is configured as a multi-spool turbofan gas turbine engine. However, while the following description and accompanying drawings may refer to the turbofan gas turbine engine of FIG. 2 as an example, it should be understood that aspects of the present disclosure may be equally applicable to other types of gas turbine engines including, but not limited to, a turboshaft gas turbine engine, a turboprop gas turbine engine, a turbojet gas turbine engine, and/or a propfan (e.g., an open rotor) gas turbine engine.

The gas turbine engine 22 of FIG. 2 includes a fan section 28, a compressor section 30, a combustor section 32, a turbine section 34, and an engine static structure 36. The compressor section 30 includes a low-pressure compressor (LPC) 30A and a high-pressure compressor (HPC) 30B. The combustor section 32 includes a combustor 38 (e.g., an annular combustor). The turbine section 34 includes a high-pressure turbine (HPT) 34A and a low-pressure turbine (LPT) 34B. The compressor section 30, the combustor section 32, and the turbine section 34 may collectively be referred to as an "engine core."

Components of the fan section 28, the compressor section 30, and the turbine section 34 form a first rotational assembly 40 (e.g., a high-pressure (HP) spool) and a second rotational assembly 42 (e.g., a low-pressure (LP) spool) of the gas turbine engine 22. The first rotational assembly 40 and the second rotational assembly 42 are mounted for rotation about a rotational axis 44 (e.g., an axial centerline) of the gas turbine engine 22 relative to the engine static structure 36.

The first rotational assembly 40 includes a first shaft 46, a bladed first compressor rotor 48 for the high-pressure compressor 30B, and a bladed first turbine rotor 50 for the high-pressure turbine 34A. The first shaft 46 interconnects the bladed first compressor rotor 48 and the bladed first turbine rotor 50.

The second rotational assembly 42 includes a second shaft 52, a bladed second compressor rotor 54 for the low-pressure compressor 30A, a bladed second turbine rotor 56 for the low-pressure turbine 34B, and a bladed fan rotor 58 for the fan section 28. The second shaft 52 interconnects the bladed second compressor rotor 54 and the bladed second turbine rotor 56. The second shaft 52 may additionally interconnect the bladed fan rotor 58 with the bladed second compressor rotor 54 and the bladed second turbine rotor 56. Alternatively, the second shaft 52 may be coupled with the bladed fan rotor 58 by a gear train (e.g., a reduction gear assembly, an epicyclic gear assembly, a transmission, etc.), which may enable the bladed fan rotor 58 to operate at a different (e.g., slower) rotational speed than the bladed second compressor rotor 54, the bladed second turbine rotor 56, and the second shaft 52. The first shaft 46 and the second shaft 52 are concentric and configured to rotate about the rotational axis 44. The present disclosure, however, is not limited to concentric configurations of the first shaft 46 and the second shaft 52.

The engine static structure 36 may include one or more engine cases, cowlings, bearing assemblies, and/or other non-rotating structures configured to house and/or support (e.g., rotationally support) components of the gas turbine engine 22 sections 28, 30, 32, 34. The engine static structure 36 of FIG. 2 includes a fan case 60 and an inner fixed structure 62. The fan case 60 extends circumferentially about (e.g., completely around) the rotational axis 44 within the fan section 28. The fan case 60 is disposed radially outward of and circumscribes the bladed fan rotor 58. The inner fixed structure 62 extends circumferentially about (e.g., completely around) the rotational axis 44. The inner fixed structure 62 houses and circumscribes the compressor section 30, the combustor section 32, and the turbine section 34 (e.g., the engine core). The inner fixed structure 62 may form an exterior (e.g., an outer radial portion) of the gas turbine engine 22. The fan case 60 and the inner fixed structure 62 form portions of an annular bypass duct 64 of the propulsion system 20. The bypass duct 64 extends axially through the propulsion system 20.

The nacelle 24 forms an aerodynamic exterior of the propulsion system 20 and a housing for the gas turbine engine 22. The nacelle 24 extends circumferentially about (e.g., completely around) the rotational axis 44. The nacelle 24 extends axially along the rotational axis 44 circumscribing the gas turbine engine 22. The nacelle 24 is disposed at (e.g., on, adjacent, or proximate) and encloses the fan case 60. The nacelle 24 further forms the bypass duct 64 (e.g., an outer radial boundary of the bypass duct 64) through the propulsion system 20.

As will be discussed in further detail, the electrical assembly 26 of FIG. 2 includes a first electric machine assembly 80 (e.g., an "HP" electric machine assembly) and a second electric machine assembly 82 (e.g., an "LP" electric machine assembly). The first electric machine assembly 80 includes a first electric machine 86 (e.g., an "HP eMachine") and a first control unit 88 ("HPCU"; e.g., a motor control unit, a generator control unit, etc.). The first electric machine 86 is coupled with the first rotational assembly 40 (e.g., the first shaft 46), for example, directly or indirectly through a gear train (e.g., a gear box, a bevel gear assembly, etc.). The first control unit 88 is electrically connected to the first electric machine 86. The second electric machine assembly 82 includes a second electric machine 90 (e.g., an "LP eMachine") and a second control unit 92 ("LPCU"; e.g., a motor control unit, a generator control unit, etc.). The second electric machine 90 is coupled with the second rotational assembly 42 (e.g., the second shaft 52), for example, directly or indirectly through a gear train (e.g., a gear box, a bevel gear assembly, etc.). The second control unit 92 is electrically connected to the second electric machine 90.

Each of the electric machines 86, 90 may be configurable as an electric motor and/or an electric generator (e.g., an electric motor-generator). For example, during a motor mode of operation, the electric machines 86, 90 may operate as the electric motor to convert electricity received from the respective one of the control units 88, 92. By contrast, during a generator mode of operation, the electric machines 86, 90 may operate as the electric generator to convert mechanical power received from the respective one of the rotational assemblies 40, 42 into electricity. The electric machines 86, 90 of the present disclosure, however, are not limited to such exemplary operation. For example, one or both of the electric machines 86, 90 may alternatively each be configured as a dedicated electric generator (e.g., without the electric motor functionality) or as a dedicated electric motor (e.g., without the electric generator functionality).

Each of the control units 88, 92 is configured to control operation of the respective one of the electric machines 86, 92. For example, when operating as the electric motor, the respective control unit 88, 92 is configured to regulate a flow of electricity from an aircraft electrical system to the respective electric machine 86, 90. This electricity flow regulation may include: (a) turning-on the flow of electricity from the aircraft electrical system to the respective electric machine 86, 90 (e.g., electrically coupling the respective electric machine 86, 90 to the aircraft electrical system); (b) turning-off the flow of electricity from the aircraft electrical system to the respective electric machine 86, 90 (e.g., electrically decoupling the respective electric machine 86, 90 from the aircraft electrical system); (c) moderating the flow of electricity from the aircraft electrical system to the respective electric machine 86, 90 (e.g., to control a rotation speed and/or torque of the respective electric machine 86, 90). Here, the respective control unit 88, 92 operates as a motor controller. In another example, when operating as the electric generator, the respective control unit 88, 92 is configured to regulate a flow of electricity from the respective electric machine 86, 90 to the aircraft electrical system. This electricity flow regulation may include: (a) turning-on the flow of electricity from the respective electric machine 86, 90 to the aircraft electrical system (e.g., electrically coupling the respective electric machine 86, 90 to the aircraft electrical system); (b) turning-off the flow of electricity from the respective electric machine 86, 90 to the aircraft electrical system (e.g., electrically decoupling the respective electric machine 86, 90 from the aircraft electrical system); (c) moderating the flow of electricity from the respective electric machine 86, 90 to the aircraft electrical system. Here, the respective control unit 88, 92 operates as a generator controller.

In some embodiments, the first electric machine 86 and the second electric machine 90 may be electrically connected with a single control unit configured to configured to control operation of each of the first electric machine 86 and the second electric machine 88, similar to the operation of the first control unit 88 and the second control unit 92.

The control units 88, 92 may be connected in signal communication with and controlled by an electronic engine control (EEC) unit, a full authority digital engine control (FADEC) unit, or another control unit of the propulsion system 20 or its gas turbine engine 22. The electric machines 86, 88 and the control units 90, 92 may typically be located in different portions of the propulsion system 20. For example, the electric machines 86, 88 may be disposed within the engine static structure 36 at (e.g., on, adjacent, or proximate) the rotational assemblies 40, 42 and/or a gear train (e.g., an accessory gearbox) coupled with the rotational assemblies 40, 42. In contrast, the control units 90, 92 may be disposed outside of the engine static structure 36, for example, on the fan case 60 and/or within the nacelle 24.

In operation of the gas turbine engine 22 of FIG. 2, ambient air is directed through the fan section 28 and into a core flow path 70 (e.g., an annular flow path) and a bypass flow path 72 (e.g., an annular flow path) by rotation of the bladed fan rotor 58. Air flow along the core flow path 70 is compressed by the low-pressure compressor 30A and the high-pressure compressor 30B, mixed and burned with fuel in the combustor 38, and then directed through the high-pressure turbine 34A and the low-pressure turbine 34B. The bladed first turbine rotor 50 and the bladed second turbine rotor 56 rotationally drive the first rotational assembly 40 and the second rotational assembly 42, respectively, in response to the combustion gas flow through the high-pressure turbine 34A and the low-pressure turbine 34B. Air flow along the bypass flow path 72 is directed through the bypass duct 64. The first electric machine 86 and the second electric machine 90 may be selectively operated to apply rotational force to the first rotational assembly 40 and/or the second rotational assembly 42, respectively. The first electric machine 86 and/or the second electric machine 90 may alternatively be driven by the first rotational assembly 40 and/or the second rotational assembly 42, respectively to generate electrical power for the electrical assembly 26 (e.g., an electrical distribution system of the aircraft 1000 and/or the propulsion system 20).

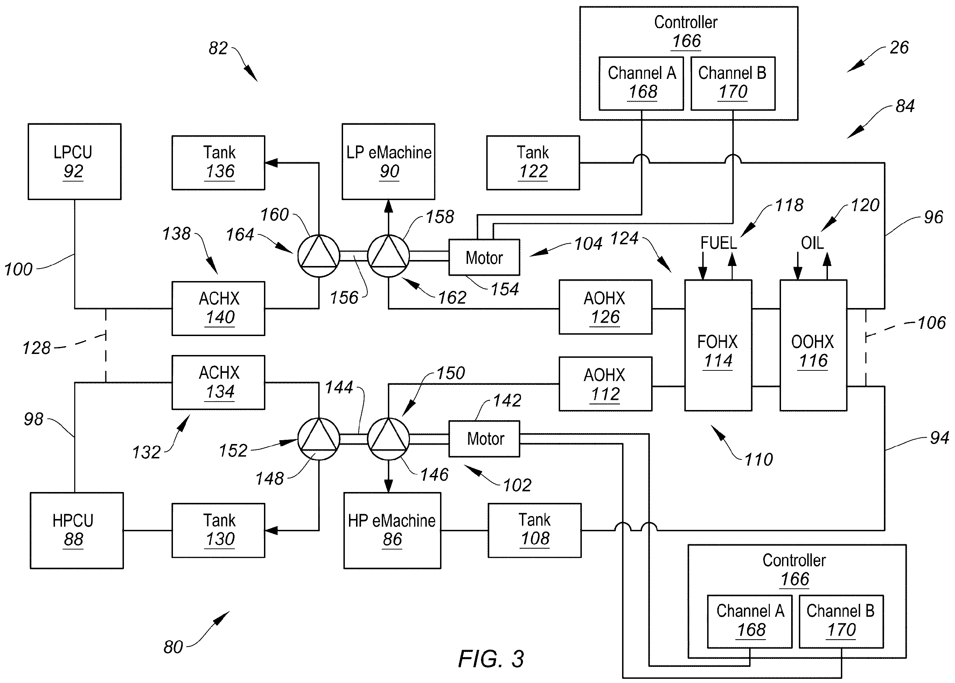

FIG. 3 schematically illustrates the first electric machine assembly 80, the second electric machine assembly 82, and the thermal management assembly 84. Components of the thermal management assembly 84 form a first electric machine cooling circuit 94, a second electric machine cooling circuit 96, a first control unit (CU) cooling circuit 98, and a second CU cooling circuit 100. The thermal management assembly 84 includes a first pump assembly 102 and a second pump assembly 104.

The first electric machine cooling circuit 94 is configured to circulate a coolant fluid (e.g., oil) through the first electric machine 86 to facilitate thermal management (e.g., cooling) and/or lubrication of the first electric machine 86. The first electric machine cooling circuit 94 of FIG. 3 is isolated from fluid communication with the other cooling circuits 96, 98, 100. However, in some embodiments, the first electric machine cooling circuit 94 may be cross-connected with the second electric machine cooling circuit 96, for example, at an exemplary fluid cross-connection 106. The thermal management assembly 84 and its first electric machine cooling circuit 94 include a coolant tank 108 and one or more heat exchangers 110 forming the first electric machine cooling circuit 94. The first electric machine cooling circuit 94 may be further formed by other components such as, but not limited to, valves, filters, regulators, and the like. Fluid interconnections between components of the first electric machine cooling circuit 94 may be made by any suitable conduit (e.g., pipe, hose, tube, etc.). The heat exchangers 110 may include one or more discrete heat exchangers of the first electric machine cooling circuit 94 and/or one or more heat exchangers common to both the first electric machine cooling circuit 94 and the second electric machine cooling circuit 96. For example, the heat exchangers 110 of FIG. 3 include an air-oil heat exchanger (AOHX) 112, a fuel-oil heat exchanger (FOHX) 114, and an oil-oil heat exchanger (OOHX) 116. The air-oil heat exchanger 112 is a discrete heat exchanger of the first electric machine cooling circuit 94. The air-oil heat exchanger 112 may be disposed at (e.g., on, adjacent, or proximate) the bypass duct 64 to facilitate cooling of the coolant fluid of the first electric machine cooling circuit 94 using air flow along the bypass flow path (see FIG. 2). The fuel-oil heat exchanger 114 is a common heat exchanger of the first electric machine cooling circuit 94 and the second electric machine cooling circuit 96. The fuel-oil heat exchanger 114 forms a portion of a fuel system 118 of the gas turbine engine 22. The fuel-oil heat exchanger 114 is configured to facilitate cooling of the coolant fluid of the first electric machine cooling circuit 94 while heating a fuel of the fuel system 118 prior to injecting the fuel into the combustor 38 (see FIG. 2) for combustion. The oil-oil heat exchanger 116 is a common heat exchanger of the first electric machine cooling circuit 94 and the second electric machine cooling circuit 96. The oil-oil heat exchanger 116 forms a portion of a main oil system 120 of the gas turbine engine 22 configured to facilitate lubrication and cooling of components of the first rotational assembly 40, the second rotational assembly 42, and/or the engine static structure (e.g., bearings, gear assemblies, etc.).

The second electric machine cooling circuit 96 is configured to circulate a coolant fluid (e.g., oil) through the second electric machine 90 to facilitate thermal management (e.g., cooling) and/or lubrication of the second electric machine 90. The second electric machine cooling circuit 96 of FIG. 3 is isolated from fluid communication with the other cooling circuits 94, 98, 100. The thermal management assembly 84 and its second electric machine cooling circuit 96 include a coolant tank 122 and one or more heat exchangers 124 forming the second electric machine cooling circuit 96. The second electric machine cooling circuit 96 may be further formed by other components such as, but not limited to, valves, filters, regulators, and the like. Fluid interconnections between components of the second electric machine cooling circuit 96 may be made by any suitable conduit (e.g., pipe, hose, tube, etc.). The heat exchangers 124 may include one or more discrete heat exchangers of the second electric machine cooling circuit 96 and/or one or more heat exchangers common to both the first electric machine cooling circuit 94 and the second electric machine cooling circuit 96. For example, the heat exchangers 124 of FIG. 3 include an air-oil heat exchanger (AOHX) 126, the fuel-oil heat exchanger (FOHX) 114, and the oil-oil heat exchanger (OOHX) 116. The air-oil heat exchanger 126 is a discrete heat exchanger of the second electric machine cooling circuit 96. The air-oil heat exchanger 126 may be disposed at (e.g., on, adjacent, or proximate) the bypass duct 64 to facilitate cooling of the coolant fluid of the second electric machine cooling circuit 96 using air flow along the bypass flow path (see FIG. 2).

The first CU cooling circuit 98 is configured to circulate a coolant fluid (e.g., oil, refrigerants, ammonia-based coolants, ethylene glycol (EG), propylene glycol (PG), or propylene glycol with water (PGW), etc.) through the first control unit 88 to facilitate thermal management (e.g., cooling) of the first control unit 88. The first CU cooling circuit 98 of FIG. 3 is isolated from fluid communication with the other cooling circuits 94, 96, 100. However, in some embodiments, the first CU cooling circuit 98 may be cross-connected with the second CU cooling circuit 100, for example, at an exemplary fluid cross-connection 128. The thermal management assembly 84 and its first CU cooling circuit 98 include a coolant tank 130 and one or more heat exchangers 132 forming the first CU cooling circuit 98. The first CU cooling circuit 98 may be further formed by other components such as, but not limited to, valves, filters, regulators, and the like. Fluid interconnections between components of the first CU cooling circuit 98 may be made by any suitable conduit (e.g., pipe, hose, tube, etc.). The heat exchangers 132 may include one or more discrete heat exchangers of the first CU cooling circuit 98 and/or one or more heat exchangers common to both the first CU cooling circuit 98 and the second CU cooling circuit 100. For example, the heat exchangers 132 of FIG. 3 include an air-coolant heat exchanger (ACHX) 134. The air- air-coolant heat exchanger 134 is a discrete heat exchanger of the first CU cooling circuit 98. The air-coolant heat exchanger 134 is configured to facilitate cooling of the coolant fluid of the first CU cooling circuit 98.

The second CU cooling circuit 100 is configured to circulate a coolant fluid (e.g., oil, refrigerants, ammonia-based coolants, ethylene glycol (EG), propylene glycol (PG), or propylene glycol with water (PGW), etc.) through the second control unit 92 to facilitate thermal management (e.g., cooling) of the second control unit 92. The second CU cooling circuit 100 of FIG. 3 is isolated from fluid communication with the other cooling circuits 94, 96, 98. The thermal management assembly 84 and its second CU cooling circuit 100 include a coolant tank 136 and one or more heat exchangers 138 forming the second CU cooling circuit 100. The second CU cooling circuit 100 may be further formed by other components such as, but not limited to, valves, filters, regulators, and the like. Fluid interconnections between components of the second CU cooling circuit 100 may be made by any suitable conduit (e.g., pipe, hose, tube, etc.). The heat exchangers 138 may include one or more discrete heat exchangers of the second CU cooling circuit 100 and/or one or more heat exchangers common to both the first CU cooling circuit 98 and the second CU cooling circuit 100. For example, the heat exchangers 138 of FIG. 3 include an air-coolant heat exchanger (ACHX) 140. The air-coolant heat exchanger 140 is a discrete heat exchanger of the second CU cooling circuit 100. The air-coolant heat exchanger 140 is configured to facilitate cooling of the coolant fluid of the second CU cooling circuit 100.

The first pump assembly 102 includes an electric machine 142, a pump shaft 144, a first pump rotor 146, and a second pump rotor 148. The first pump rotor 146 and the second pump rotor 148 are mounted on the pump shaft 144 and configured for rotation together with the pump shaft 144 driven by the electric machine 142. The first pump rotor 146 forms a portion of a coolant pump 150 of the first electric machine cooling circuit 94. The second pump rotor 148 forms a portion of a coolant pump 152 of the first CU cooling circuit 98.

The second pump assembly 104 includes an electric machine 154, a pump shaft 156, a first pump rotor 158, and a second pump rotor 160. The first pump rotor 158 and the second pump rotor 160 are mounted on the pump shaft 156 and configured for rotation together with the pump shaft 156 driven by the electric machine 154. The first pump rotor 158 forms a portion of a coolant pump 162 of the second electric machine cooling circuit 96. The second pump rotor 160 forms a portion of a coolant pump 164 of the second CU cooling circuit 100.

Still referring to FIG. 3, in some embodiments, the electric machines 142, 154 may each be electrically driven by a respective dual-channel pump controller 166 of the thermal management assembly 84. The dual-channel pump controller 166 includes a first control channel 168 ("Channel A") and a second control channel 170 ("Channel B"). The first control channel 168 and the second control channel 170 are each operable (e.g., independently) to condition and supply electrical power to the electric machine 142 or the electric machine 154 to control a rotation speed of the electric machine 142 or the electric machine 154, respectively. This configuration of the thermal management assembly 84 facilitates improved reliability of the thermal management assembly 84 allowing continued operation of the pump assemblies 102, 104 in the event of a failure of one of the control channels 168, 170.

In operation, the first pump assembly 102 (e.g., the electric machine 142) drives the first pump rotor 146 and the second pump rotor 148 (e.g., through the pump shaft 144) to direct (e.g., pump) coolant along both the first electric machine cooling circuit 94 and the first CU cooling circuit 98, respectively. Similarly, the second pump assembly 104 (e.g., the electric machine 154) drives the first pump rotor 158 and the second pump rotor 160 (e.g., through the pump shaft 156) to direct (e.g., pump) coolant along both the second electric machine cooling circuit 96 and the second CU cooling circuit 100, respectively. Fluid isolation of the cooling circuits 94, 96, 98, 100 facilitates continued operation of one of the first electric machine assembly 80 or the second electric machine assembly 82 in the event of a failure of one of the pump assemblies 102, 104. Moreover, fluid isolation of the electric machine cooling circuits 94, 96 from the CU cooling circuits 98, 100 facilitates improved temperature control for the electric machines 86, 90 and the control units 88, 92, respectively. Oil for cooling and lubrication of the electric machines 86, 90 may be maintained at an optimal higher temperature, thereby reducing cooling needs for the electric machine cooling circuits 94, 96 oil while still accommodating the lower coolant temperature limits of the control units 88, 92 with the CU cooling circuits 98, 100. Moreover, the independent configuration of the electric machine cooling circuits 94, 96 and the CU cooling circuits 98, 100 may facilitate use of different coolants for the electric machine cooling circuits 94, 96 and CU cooling circuits 98, 100. For example, the CU cooling circuits 98, 100 may include a coolant such as, but not limited to, ethylene glycol (EG), propylene glycol (PG), or propylene glycol with water (PGW), which may facilitate improved cooling of the control units 88, 92 relative to the oil used by the electric machine cooling circuits 94, 96.

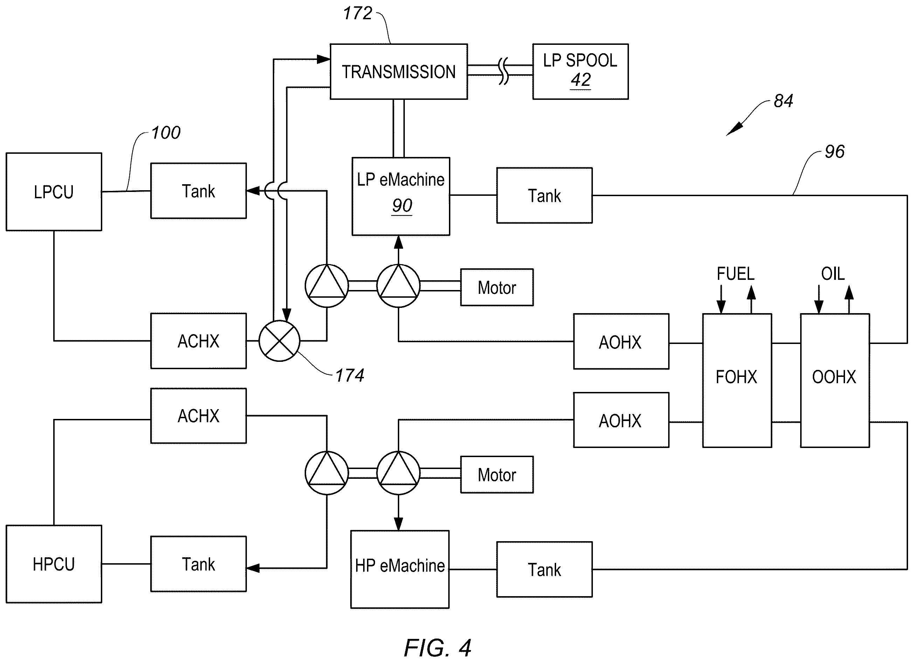

Referring to FIG. 4, in some embodiments, the thermal management assembly 84 may facilitate operation of a transmission 172 of the gas turbine engine 22 (see FIG. 2) interconnecting the second electric machine 90 and the second rotational assembly 42 (e.g., the second shaft 52; see FIG. 2). The transmission 172 includes a gear assembly operable to vary a gear ratio between the second electric machine 90 (e.g., an output shaft of the second electric machine 90) and the second rotational assembly 42. The transmission 172 of FIG. 4 is connected in fluid communication with the second CU cooling circuit 100. The transmission 172 may alternatively be connected in fluid communication with the second electric machine cooling circuit 96. The coolant fluid from the second CU cooling circuit 100 (or the second electric machine cooling circuit 96) facilitates hydraulic operation of the transmission 172 (e.g., the gear assembly) to vary the gear ratio between the second electric machine 90 and the second rotational assembly 42. The thermal management assembly 84 of FIG. 4 includes a transmission control valve 174 connected in fluid communication with and between the second CU cooling circuit 100 and the transmission 172. The transmission control valve 174 controls coolant fluid flow between the second CU cooling circuit 100 and the transmission 172 to hydraulically control a state (e.g., gear ratio) of the transmission 172.

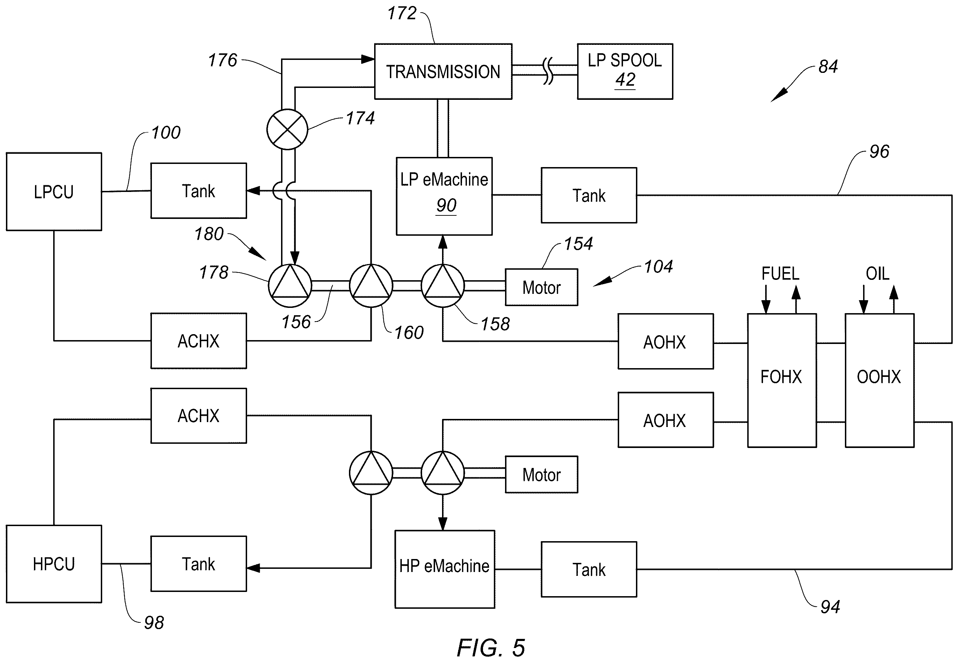

Referring to FIG. 5, in some embodiments, the thermal management assembly 84 may form a transmission fluid circuit 176 for the transmission 172 which is independent of (e.g., isolated from fluid communication with) the cooling circuits 94, 96, 98, 100. The second pump assembly 104 of FIG. 5 includes a third pump rotor 178. The third pump rotor 178 is mounted on the pump shaft 156 and configured for rotation together with the pump shaft 156, the first pump rotor 158, and the second pump rotor 160 driven by the electric machine 154. The third pump rotor 178 forms a portion of a transmission fluid pump 180 of the transmission fluid circuit 176. The transmission control valve 174 of FIG. 5 is connected in fluid communication with and between the transmission fluid pump 180 and the transmission 172. The transmission control valve 174 controls coolant fluid flow between the transmission fluid pump 180 and the transmission 172 to hydraulically control a state (e.g., gear ratio) of the transmission 172.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

The terms "substantially," "about," "approximately," and other similar terms of approximation used throughout this patent application are intended to encompass variations or ranges that are reasonable and customary in the relevant field. These terms should be construed as allowing for variations that do not alter the basic essence or functionality of the invention. Such variations may include, but are not limited to, variations due to manufacturing tolerances, materials used, or inherent characteristics of the elements described in the claims, and should be understood as falling within the scope of the claims unless explicitly stated otherwise.

No element, component, or method step in the present disclosure is intended to be dedicated to the public regardless of whether the element, component, or method step is explicitly recited in the claims. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. A hybrid-electric aircraft propulsion system (20) comprising:
a gas turbine engine (22) comprising a first rotational assembly (40), the first rotational assembly (40) comprises a first shaft (46), a bladed first compressor rotor (48), and a bladed first turbine rotor (50), the first shaft (46) interconnecting the bladed first compressor rotor (48) and the bladed first turbine rotor (50); and
an electrical assembly (26) comprising a first electric machine (86), a first control unit (88), and a thermal management assembly (84),
the first electric machine (86) being coupled with the first rotational assembly (40),
the first control unit (88) being electrically connected to the first electric machine (86), and
the thermal management assembly (84) comprises a first electric machine cooling circuit (94), a first control unit (CU) cooling circuit (98), and a first pump assembly (102), the first electric machine cooling circuit (94) being connected in fluid communication with the first electric machine (86), the first CU cooling circuit (98) being connected in fluid communication with the first control unit (88) and isolated from fluid communication with the first electric machine cooling circuit (94), the first pump assembly (102) comprising a first pump shaft (144), a first pump rotor (146), and a second pump rotor (148), the first pump rotor (146) and the second pump rotor (148) being mounted on the first pump shaft (144), the first pump rotor (146) forming a first coolant pump (150) of the first electric machine cooling circuit (94), the second pump rotor (148) forming a second coolant pump (152) of the first CU cooling circuit (98).

2. The hybrid-electric aircraft propulsion system of claim 1, wherein the first pump assembly (102) further comprises a pump electric machine (142) configured to drive rotation of the first pump shaft (144), the thermal management assembly (84) further comprises a dual-channel controller (166) comprising a first control channel (168) and a second control channel (170), and each of the first control channel (168) and the second control channel (170) is electrically connected to the pump electric machine (142).

3. The hybrid-electric aircraft propulsion system of claim 1 or 2, wherein the gas turbine engine (22) further comprises a transmission interconnecting the first rotational assembly (40) and the first electric machine (86), and the transmission is connected in fluid communication with the first CU cooling circuit (98).

4. The hybrid-electric aircraft propulsion system of claim 3, wherein the thermal management assembly (84) further comprises a transmission control valve connected in fluid communication with and between the transmission and the first CU cooling circuit (98); and/or wherein the first rotational assembly further comprises a bladed fan rotor coupled with the first shaft.

5. The hybrid-electric aircraft propulsion system of any preceding claim, wherein the gas turbine engine (22) further comprises a transmission interconnecting the first rotational assembly (40) and the first electric machine (86), the thermal management assembly (84) further comprises a transmission fluid circuit connected in fluid communication with the transmission, the first pump assembly (102) comprises a third pump rotor mounted on the first pump shaft (144), and the third pump rotor forms a transmission fluid pump of the transmission fluid circuit.

6. The hybrid-electric aircraft propulsion system of any preceding claim, wherein:
the gas turbine engine (22) comprises a second rotational assembly (42), the second rotational assembly (42) comprises a second shaft (52), a bladed second compressor rotor (54), and a bladed second turbine rotor (56), and the second shaft (52) interconnects the bladed second compressor rotor (54) and the bladed second turbine rotor (56);
the electrical assembly (26) comprises a second electric machine (90) and a second control unit (92), the second electric machine (90) is coupled with the second rotational assembly (42), and the second control unit (92) is electrically connected to the second electric machine (90); and
the thermal management assembly (84) comprises a second electric machine cooling circuit (96), a second CU cooling circuit (100), and a second pump assembly (104), the second electric machine cooling circuit (96) is connected in fluid communication with the second electric machine (90), the second CU cooling circuit (100) is connected in fluid communication with the second control unit (92) and isolated from fluid communication with the second electric machine cooling circuit (96), the second pump assembly (104) comprises a second pump shaft (156), a third pump rotor (158), and a fourth pump rotor (160), the third pump rotor (158) and the fourth pump rotor (160) are mounted on the second pump shaft (156), the third pump rotor (158) forms a third coolant pump (162) of the second electric machine cooling circuit (96), and the fourth pump rotor (160) forms a fourth coolant pump (164) of the second CU cooling circuit (100).

7. The hybrid-electric aircraft propulsion system of claim 6, wherein the first electric machine cooling circuit (94) is isolated from fluid communication with the second electric machine cooling circuit (96), optionally wherein the thermal management assembly (84) further comprises a heat exchanger (110; 112; 114; 116; 124; 126; 132; 134; 138; 140) forming the first electric machine cooling circuit (94) and the second electric machine cooling circuit (96).

8. The hybrid-electric aircraft propulsion system of claim 6 or 7, wherein the first CU cooling circuit (98) is isolated from fluid communication with the second CU circuit (100).

9. A hybrid-electric aircraft propulsion system (20) comprising:
a gas turbine engine (22) comprising a first rotational assembly (40) and a second rotational assembly (42); and
an electrical assembly (26) comprising a first electric machine (86), a first control unit (88), a second electric machine (90), a second control unit (92), and a thermal management assembly (84),
the first electric machine (86) being coupled with the first rotational assembly (40),
the first control unit (88) being electrically connected to the first electric machine (86),
the second electric machine (90) being coupled with the second rotational assembly (42),
the second control unit (92) being electrically connected to the second electric machine (90), and
the thermal management assembly (84) comprising a plurality of independent cooling fluid circuits comprising a first electric machine cooling circuit (94) for the first electric machine (86), a first control unit (CU) cooling circuit (98) for the first control unit (88), a second electric machine cooling circuit (96) for the second electric machine (90) , and a second CU cooling circuit (100) for the second control unit (92), the thermal management assembly (84) further comprising a first pump assembly (102) and a second pump assembly (104), the first pump assembly (102) being configured to circulate coolant through the first electric machine cooling circuit (94) and the first CU cooling circuit (98), and the second pump assembly (104) being configured to circulate coolant through the second electric machine cooling circuit (96) and the second CU cooling circuit (100).

10. The hybrid-electric aircraft propulsion system of claim 9, wherein the first pump assembly (102) comprises a first pump shaft (144), a first pump rotor (146), and a second pump rotor (148), the first pump rotor (146) and the second pump rotor (148) are mounted on the first pump shaft (144), the first pump rotor (146) forms a first coolant pump (150) of the first electric machine cooling circuit (94), and the second pump rotor (148) forms a second coolant pump (152) of the first CU cooling circuit (98).

11. The hybrid-electric aircraft propulsion system of claim 9 or 10, wherein the first rotational assembly (40) forms a high-pressure spool (40) of the gas turbine engine (22) and the second rotational assembly (42) forms a low-pressure spool (42) of the gas turbine engine (22).

12. The hybrid-electric aircraft propulsion system of claim 11, wherein the gas turbine engine (22) further comprises a transmission (172) interconnecting the second rotational assembly (42) and the second electric machine (90), and the transmission (172) is connected in fluid communication with the second CU cooling circuit (100), optionally wherein the thermal management assembly (84) further comprises a transmission control valve (174) connected in fluid communication with and between the transmission (172) and the second CU cooling circuit (100).

13. The hybrid-electric aircraft propulsion system of claim 11, wherein the gas turbine engine (22)further comprises a transmission (172) interconnecting the second rotational assembly (42) and the second electric machine (90), the thermal management assembly (84) further comprises a transmission fluid circuit (176) connected in fluid communication with the transmission (172), the second pump assembly (104) comprises a pump shaft (156) and a pump rotor (178), the pump rotor (178) is mounted on the pump shaft (156), and the pump rotor (178) forms a transmission fluid pump (180) of the transmission fluid circuit (176).

14. The hybrid-electric aircraft propulsion system of any of claims 9 to 13, wherein the thermal management assembly (84) further comprises a heat exchanger (110; 112; 114; 116; 124; 126; 132; 134; 138; 140) forming the first electric machine cooling circuit (94) and the second electric machine cooling circuit (96), optionally wherein:
the gas turbine engine (22) further comprises a fuel system (118) and the heat exchanger (114) is a fuel-oil heat exchanger (114) of the fuel system (118); and/or
the gas turbine engine (22) further comprises a main oil system (120) and the heat exchanger (116) is an oil-oil heat exchanger (116) of the main oil system (120).

15. A method for operating a thermal management assembly (84) of a hybrid-electric propulsion system (20), the method comprising:
rotating a first rotational assembly (40), the first rotational assembly (40) comprising a first shaft (46), a bladed first compressor rotor (48), and a bladed first turbine rotor (50), the first shaft (46) interconnecting the bladed first compressor rotor (48) and the bladed first turbine rotor (50);
selectively operating a first electric machine (86) coupled with the first rotational assembly (40) using a first control unit (88) electrically connected to the first electric machine (86); and
operating a thermal management assembly (84) comprising a first electric machine cooling circuit (94) and a first control unit (CU) cooling circuit (98) by pumping a coolant through each of the first electric machine cooling circuit (94) and the first CU cooling circuit (98) with a first pump assembly (102), the first pump assembly (102) comprising a pump electric machine (142), a first pump rotor (146) at the first electric machine cooling circuit (94), and a second pump rotor (148) at the first CU cooling circuit (98), the pumping the coolant through each of the first electric machine cooling circuit (94) and the first CU cooling circuit (98) with the first pump assembly (102) comprising driving rotation of the first pump rotor (146) and the second pump rotor (148) with the pump electric machine (142), the first electric machine cooling circuit (94) isolated from fluid communication with the first CU cooling circuit (98).
